# EUROPEAN PATENT APPLICATION

(11) **EP 0 533 373 A2**
(43) Date of publication of application: **24.03.1993**
(21) Application number: 92307964.4
(22) Date of filing: 02.09.1992
(51) Int. Cl.: G06F 12/08

(54) **Computer system having cache memory**

(30) Priority: 18.09.1991 US 762100
(71) Applicant: NCR International, Inc., Dayton, Ohio 45479 (US)
(72) Inventor: Walrath, Craig A., Easley, SC 29642 (US); Pike, Jimmy D., Greenville SC 29607-4324 (US); Young, Gene F., Lexington, SC 29072 (US); Strickland, Terry S., Greenville, SC 29607 (US); Cochcroft, Arthur F., Jr., West Columbia, SC 29170 (US)
(74) Representative: Robinson, Robert George

(57) **Abstract**

A computer system includes at least two processors (66,72) cooperating via a system bus (62) with a main memory. The processors operate in association with respective first-level and second-level caches (68,70,74,78). In alternative arrangements, at least one of the processors operates in association with only a single cache. Bus operations on the system bus ensure data coherency is maintained.

## Description

This invention relates to computer systems utilizing cache memory.

Cache memories were added to computer systems in the late 1960's in order to reduce the amount of time that the system's processor spent waiting for data to be transferred for processing and thereby reduce overall processing time. At that time, the typical computer system had only one processor which was often referred to as the central processing unit.

As both the need and demand for data processing power became greater, other devices were added to computer systems to assist the central processor unit. These other devices typically specialized in some processing area and performed that function for the central processing unit. Direct memory access controllers and mathematical co-processors are examples of such specialized devices. Since the specialized processor or controller does not interact with the computer system main memory in the same way that the central processing unit interacts, these specialized devices do not have actual cache memories.

As the need and demand for data processing power grew even greater, the usual upgrade strategy consisted of improving the single main processor and its associated cache memory to higher and higher performance levels by using faster and faster components.

It is an object of the present invention to provide a computer system having cache memory, which is versatile and adapted to operate in an efficient manner.

Therefore, according to the present invention, there is provided a computer system having a main memory adapted to store data and a system bus connected to said main memory and adapted to communicate data, characterized by a first main processor coupled to said system bus and adapted to process data in cooperation with said main memory; and a second main processor coupled to said system bus and adapted to process data in cooperation with said main memory, at least one of said first main processor and said second main processor operating with assistance from cache memory means.

It will be appreciated that a computer system according to the invention is versatile in that different cache types can be readily utilized thereon, while maintaining efficient operation.

Embodiments of the present invention will now be described by way of example, with reference to the accompanying drawings, in which:-
Fig. 1 is a block diagram of a computer system having a first main processor without a cache memory and at least one other main processor with a cache memory connected via a system bus to a common main memory.
Fig. 2 is a block diagram of a computer system having a first main processor with a first cache memory and a second main processor with a second cache memory at a first level and a third cache memory at a second level connected via a system bus to a common main memory.
Fig. 3 is a block diagram of a main processor that has a first level cache included on its integrated circuit.
Fig. 4 is a block diagram of a computer system having a first main processor with a first cache memory at a first level and a second cache memory at a second level, and a second main processor with a third cache memory at a first level and a fourth cache memory at a second level.

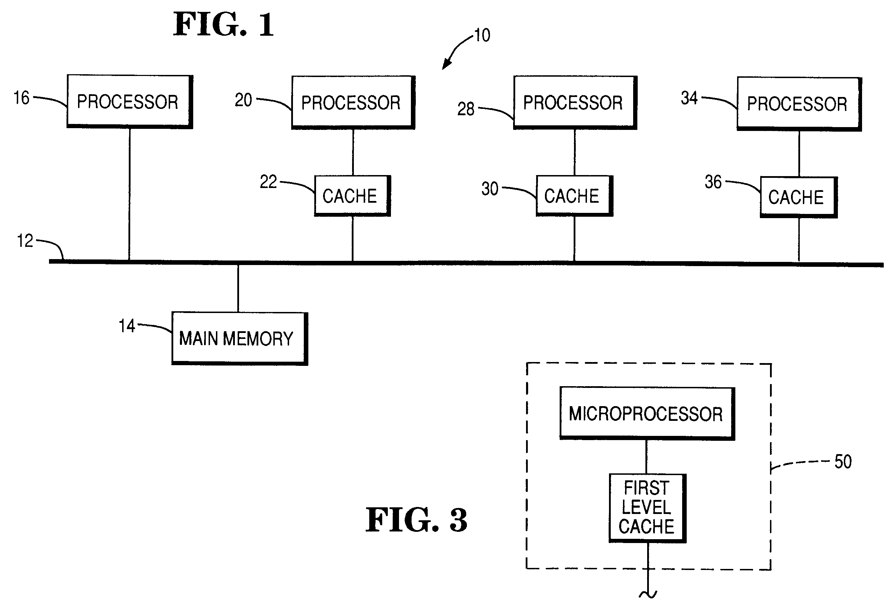

Referring now to Fig. 1, a computer system 10 is shown in block diagram form. Computer system 10 has a system bus 12 which is a high speed parallel bus. A main memory 14 is connected to the system bus 12. In this manner, main memory 14 is common and accessible to all devices that are connected to the system bus 12.

A processor 16 is connected directly to the system bus 12. Connected in this manner, processor 16 can read and write data bits from and to main memory 14 via system bus 12. Since processor 16 either lacks a local cache or has its local cache disabled, each access it makes must go all the way to main memory, which is a time consuming path.

Another processor 20 is connected to a write-through cache 22, and write-through cache 22 is connected to system bus 12. Connected in this manner, processor 20 can very quickly access data from its write-through cache 22 if there is a read hit. The processor 20 can also quickly access data from its write-through cache 22 if there is a write hit. If there is a write hit, write-through cache 22 returns the data line to its processor 20, and writes the data line through to main memory 14. At this point, a status table in main memory 14 would be updated to indicate that write-through cache 22 had the latest version of the written line of data. Since write-through cache memory 22 has the latest version of the data line, all other versions in all other caches would be invalidated. Such invalidation may be implemented with the help of a central status table and a memory controller in main memory 14, but it will be appreciated that distributed status tables and controllers could also be used if the system 10 had snoopers associated with the cache memories.

Another processor 28 is connected to a write-back cache 30, and write-back cache 30 is connected to system bus 12. Connected in this manner, processor 28 can very quickly access data from its write-back cache 30 if there is a read hit or a write hit.

A write-back cache, also known as a copy-back cache, prevents both read hits and write hits from reaching the system bus 12. Since the processor 28 can freely modify the data that is in its write-back cache, some type of global cache coherency device must be included to limit the ability to freely modify data within a line to only one processor and its associated cache at any time. If the processor 28 and its cache 30 can freely modify a line of data, they are said to have ownership of the data. Other processor-cache arrangements may use the line of data that processor 28 and write-back cache 30 own, but any such processor-cache arrangement must report any modification that it makes to the global cache coherency device so the owner may be updated, for example by an invalidation operation.

Since processor 28 and write-back cache 30 can freely modify any owned data line, if an owned line is modified and then replaced, for example by a least-recently-used (LRU) cache line replacement process, then the write-back cache 30 is required to write this line of data back to the main memory 14. This is required because this modified line is the latest version of the data.

There are two types of write-back caches: a non-allocate-on-write-miss type and an allocate-on-write-miss type. The non-allocate-on-write-miss type takes no action in the event of a write miss, so the write is transmitted over the system bus 12 to main memory 14. An allocate-on-write-miss type, on the other hand, causes storage space to be allocated and causes the missed line to be read into the cache when a write-miss occurs. Any write-miss data from the processor is then merged with the data that is read from the main memory 14 as a result of the write-miss, and the merged data line is stored in the allocated storage space in the cache.

A yet further processor 34 is connected to a write cache 36, and write cache 36 is connected to system bus 12. Write cache 36, as its name implies, only keeps write hits off of the system bus 12. All reads from the processor 34 are passed by the write cache 36 to main memory 14. If the read is a hit, then any modified data will be merged with the line of data returned from the main memory 14. A write cache is an inexpensive way of improving the performance of either a processor without a cache or a processor with a write-through cache.

Thus, the computer system 10 may have any mixture of processors without caches, processors with write-through caches, processors with write-back caches, and processors with write caches processing data together and using the main memory 14 together.

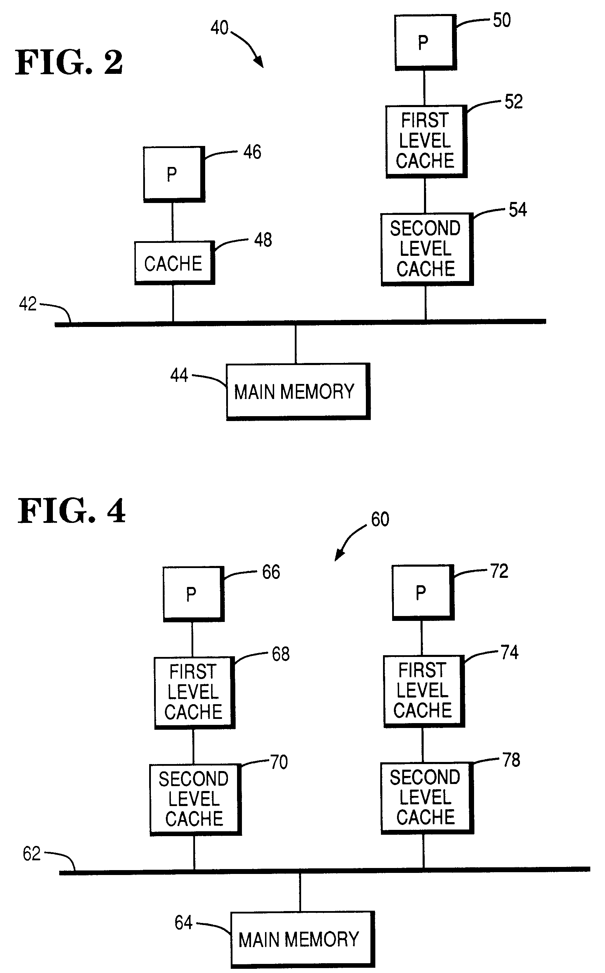

Referring now to Fig. 2, a computer system 40 is shown in block diagram form. Computer system 40 has a system bus 42 which is a high speed parallel bus. A main memory 44 is connected to the system bus 42. In this manner, main memory 44 is common and accessible to all devices that are connected to the system bus 42, just as in the computer system 10 of Fig. 1.

A processor 46 is connected to a first level cache memory 48, and the first level cache memory 48 is connected to system bus 42. There can be more than one processor connected to a respective first level cache, but for brevity, only processor 46 and cache 48 are shown in Fig. 2. The first level cache can be a write-through type, a non-allocate-on-write-miss write-back cache, an allocate-on-write-miss write-back cache, or a write cache. Thus, processor 46 can be any of the single level processor-cache combinations described with respect to Fig. 1.

A second processor 50 is connected to a first level cache memory 52. The first level cache memory 52 is connected to a second level cache memory 54, and the second level cache memory 54 is connected to the system bus 42. Certain combinations of first and second level cache memories 52, 54 are especially advantageous. For example, if processor 50 were an 80486 by Intel Corporation of Santa Clara, California, which has a powerful microprocessor and a write-through cache located on the same integrated circuit, as shown in Fig.3, the first level cache would be the on-chip write-through cache. With a write-through cache at the first level, to reduce bus traffic the second level cache could be either a write-back cache or a write cache.

Referring now to Fig. 4, a computer system 60 is shown in block diagram form. Computer system 60 has a system bus 62 which is a high speed parallel bus. A main memory 64 is connected to the system bus 62. In this manner, main memory 64 is common and accessible to all devices that are connected to the system bus 62, just as in the computer systems 10 and 40 of Figs. 1 and 3.

A processor 66 is connected to a first level cache memory 68, and the first level cache memory 68 is connected to a second level cache memory 70. The second level cache memory 70 is connected to system bus 62.

Another processor 72 is connected to a first level cache memory 74 and the first level cache memory 74 is connected to a second level cache memory 76. The second level cache memory 76 is connected to the system bus 62. There may be more than two main processor arrangements shown with processor 66, 72 and two level cache memories 68, 70; 74, 78, but for brevity only these two will be described.

Certain combinations of first and second level cache memories 68, 70; and 74, 78 are especially advantageous. For example, if processors 66, 72 were 80486s by Intel Corporation of Santa Clara, California, which has a powerful microprocessor and a write-through cache located on the same integrated circuit, as shown in Fig.3, the first level cache memories 68, 74 would be the on-chip write-through cache. With write-through cache memories at the first level, to reduce bus traffic there could be a non-allocate-on-write-miss type of write-back cache, an allocate-on-write-miss type of write-back cache or a write cache as the second level cache memories 70, 78. Another advantageous combination is for processors 66, 72, to have a type of write-back cache as part of its integrated circuit as a first level cache 68, 74 and a type of write-back cache to also be its second level cache 70, 78.

### IN OPERATION

To allow the various processor-cache memory hierarchies to be used together in computer systems having multiple main processors, a procedure must be followed to provide cache coherency among all of the cache memories and main memory. This procedure makes it possible for a computer system to operate processors without cache memories, processors with associated write-through cache memories, processors with associated write-back cache memories of either type, processors with associated write cache memories, and processors with multiple level cache memory hierarchies together and maintain data coherency.

The procedure for operating multiple processors and their various cache memories includes a set of bus operations. These bus operations are initiated by any main processor arrangement, which may or may not include a cache memory, in response to a processor's read that does not hit a line in a cache, an I/O operation, any locked operation, or any operation requiring a broadcast request across the system bus. Each bus operation notifies the other main processor arrangements how the operation will affect the coherency of the data in their cache memories.

For a non-cache processor arrangement, there are no data coherency problems that it can generate. For such a arrangement there are two main categories of bus operations that can take place: writes and reads. Thus the operations include:
a. Non_Caching Master Partial Line Write, which is initiated by a non-cache main processor arrangement and writes a partial data line to memory.
b. Non_Caching Master Full Line Write, which is initiated by a non-cache main processor arrangement and writes a full data line to memory.
c. Non_Caching Master Partial Line Read, which is initiated by a non-cache main processor arrangement and reads a partial data line from memory.
d. Non_Caching Master Full Line Read, which is initiated by a non-cache main processor arrangement and reads a full line of data from memory even if it cannot locally buffer the entire line.

In a computer system that has both non-cache processor arrangements and cache memory processor arrangements, non-cache processor arrangements and cache-processor arrangements performing non-caching operations, e.g. accessing a do-not-cache status data line, may issue the four bus operations listed above.

For a processor arrangement with a write-through cache memory, some memory coherency device must be used. As mentioned previously, a write-through cache memory only prevents read hits from reaching the system bus. Write hits are updated in the write-through cache memory, but also propagate through onto the system bus. Because all writes are propagated through to main memory, a write-through cache is not required to own a line of data. Moreover, main memory always has a most current copy of every data line. The only cache coherency mechanism required is one that invalidates a data line in any cache that is written to by another processor arrangement. The cache coherency mechanism can be distributed among the caches, i.e. snooper based, main memory based using centralized invalidation cycles, or a combination of both.

The bus operations of the non-cache processor arrangements are valid in systems with write-through cache processor arrangements, but non-cache processor arrangements and cache-processor arrangements performing non-caching operations, e.g. accessing a do-not-cache status data line, may initiate such bus operations.

The bus operations that must be added for a computer system with write-through cache memory processor arrangements are:
a. Read Shared, which is initiated by a processor with a write-through cache to read a line of data into its cache as a result of a read miss.
b. Read Through Full Line, which is a read of a line of data from main memory, but the line of data is not placed into the cache, i.e. the line is not stored in the cache or if it is already stored, the line in the cache is not used or updated.
c. Read Through Partial Line, which is a read of a partial line of data from main memory, but the partial line of data is not placed into the cache, i.e. the partial line is not stored in the cache or if it is already stored, the partial line in the cache is not used or updated.
d. Write Through Full Line, which is a write of a full line of data by a processor having a write-through cache to main memory, the line of data may or may not be stored in the processor's write-through cache.
e. Write Through Partial Line, which a write of a partial line of data by a processor having a write-through cache to main memory, the partial line of data may or may not be stored in the processor's write-through cache.

For a processor arrangement with a write-back cache memory, additional memory coherency device must be used over that required for the write-through cache memories. A write-back cache memory prevents both read hits and write hits from reaching the system bus. Write hits update the line of data stored in the write-back cache memory, but also marks the line as modified. A global cache coherency mechanism must be used so the write-back caches can identify to all caches those lines of data they respectively own and may freely modify without informing the rest of the computer system. Since the owning write-back cache memory may have the only valid copy of a line of data, the write-back cache must update main memory whenever the cache replaces a modified line of data.

The cache coherency used for write-back cache memories includes local cache tags which indicate which lines of data are locally owned and the global mechanism must also indicate which write-back cache owns a line, if any.

There are two types of write-back cache memories: non-allocate-on-write-miss type and allocate-on-write-miss type. Both types use a common set of bus operations to their respective cache memories, but there also is a set of bus operations that is unique to each type. The write-back bus operations are:
a. Write Copy-Back Invalid, which is initiated by a processor arrangement having a write-back cache that replaces a data line which has a modified status with a different line of data. The replaced line is marked as invalid, and the bus operation is completed by the main memory controller storing the replaced data line.
b. Write Copy-Back Shared, which is initiated by a processor arrangement having a write-back cache that replaces a data line which has a modified status with a different line of data. Since the line is shared, the replaced line is not marked as invalid by the processor arrangement. For example, a data line may be replaced in the second level cache but still marked shared in the first level cache, and so from a system point of view the data line is still shared. This bus operation is completed by the main memory controller storing the replaced data line.
c. Read Through Owned, which initiated by a processor arrangement having a write-back cache that reads a line of data that it currently owns. This operation indicates to the main memory controller of a memory-based coherency system that the controller is not required to request the data line read, even though the data line is marked as owned by some processor arrangement on the system bus.
d. Write for Ownership, which is initiated by the processor arrangement having a write-back cache if a write to a data line hits a write-back cache line that has a shared status. In such a case, data requesting ownership is written-through to the system bus and the main memory. When main memory accepts this data, the requesting processor arrangement changes the status of its line of data to owned by its write-back cache.
This ends the common set of write-back bus operations.

For a non-allocate-on-write-miss write-back cache, there are two additional bus operations used:
a. Write Through Full, which is initiated by a processor arrangement having a non-allocate-on-write-miss write-back cache if it writes a data line to main memory and that same data line is or is not stored in its local cache.
b. Write Through Partial, which is initiated by a processor arrangement having a non-allocate-on-write-miss write-back cache if it writes a partial data line to main memory and that same partial data line is or is not stored in its local cache.

For an allocate-on-write-miss write-back cache, there is one additional bus operation called a Read for Ownership operation that must be added.
a. Read for Ownership is initiated by the processor arrangement having an allocate-on-write-miss write-back cache in the event of a write miss prevents the propagation of the write miss across the system bus, and instead performs a read from main memory and as the data is returned, the write miss data is locally merged and stored in its cache. The cache status of the line is immediately set to modified, and any existing memory tag is set such that the processor arrangement initiating this operation is indicated as the owner. The Read for Ownership operation always expects a full data line to be returned from main memory.

For a processor arrangement with a write cache memory, is very similar to the write-back cache with regard to memory coherency device requirements. A write cache memory prevents only write hits from reaching the system bus and thus is simpler than a write-back cache. Write hits update the line of data stored in the write cache memory and cause the line to be marked as modified. A global cache coherency mechanism must be used as with the write-back caches in order to identify to all caches those lines of data that are owned. Since the owning write cache memory may have the only valid copy of a line of data, the write cache must update main memory whenever the cache replaces a modified line of data.

Reads, on the other hand, always are directed to main memory, and if they happen to hit a line of data stored in the local write cache, the modified data is merged with the data returned from main memory.

The cache coherency used for write cache memories includes local cache tags which indicate which lines of data are locally owned and a global mechanism which indicates which write cache owns a line, if any. The bus operations required to operate a processor arrangement with a write cache include:
a. Write Copy-Back Invalid, which is initiated by a processor arrangement having a write-back or a write cache that replaces a data line which has a modified status with a different line of data. The replaced line is marked as invalid, and the bus operation is completed by the main memory controller storing the replaced data line.
b. Write Copy-Back Shared, which is initiated by a processor arrangement having a write-back or a write cache that replaces a data line which has a modified status with a different line of data. Since the line is shared, the replaced line is not marked as invalid by the processor arrangement. For example, a data line may be replaced in the second level cache but still marked shared in the first level cache, and so from a system point of view the data line is still shared. This bus operation is completed by the main memory controller storing the replaced data line.
c. Read Through Owned, which initiated by a processor arrangement having a write-back or a write cache that reads a line of data that it currently owns. This operation indicates to the main memory controller of a memory-based coherency system that the controller is not required to request the data line read, even though the data line is marked as owned by some processor arrangement on the system bus.
d. Write Through Partial, which is initiated by a processor arrangement having a non-allocate-on-write-miss write-back cache or a write cache if it writes a partial data line to main memory and that same partial data line is or is not stored in its local cache.

By providing a computer system with the ability to perform all of these bus operations to operate with the various types of cache memory arrangements and coherency mechanisms, the system may include processor-cache arrangements having a write-through cache, a non-allocate-on-write-miss write-back cache, an allocate-on-write-miss write-back cache, a write cache, and no cache. Further, multiple level arrangements of caches such as a write-through first level cache and a write-back second level cache, a write-through first level cache and a write cache second level cache may also be combined and operated with one or more of the single level cache arrangements mentioned previously all within the same system by using the previously described operations.

Thus, it will now be understood that there has been disclosed a computer system which includes processor arrangements having different types of cache memories. Although the present invention may be used with any type of processor, it is very advantageous when used with a processor that has an on-chip write-through cache memory or an on-chip write-back memory. The present invention could be practiced on systems with N system buses as long as the main memory is N-ported such that the main memory can be common to all processors.

## Claims

1. A computer system having a main memory (14,44,64) adapted to store data and a system bus (12,42,62) connected to said main memory (14,44,64) and adapted to communicate data, characterized by a first main processor (16,46,66) coupled to said system bus (12,42,62) and adapted to process data in cooperation with said main memory (14,44,64); and a second main processor (20,50,72) coupled to said system bus (12,42,62) and adapted to process data in cooperation with said main memory (14,44,64), at least one of said first main processor (16,46,66) and said second main processor (20,44,64) operating with assistance from cache memory means (22;48;52,54;68,70;74,78).

2. A computer system according to claim 1, characterized in that said first main processor (16) operates without assistance from a cache memory and said second main processor (20) operates with assistance from a first cache memory.

3. A computer system according to claim 2, characterized in that said first cache memory consists of a first cache (22).

4. A computer system according to claim 2 or 3, characterized by a third main processor (28) operating with assistance from a second cache (30) which is of a different type from the type of said first cache (22).

5. A computer system according to claim 2, characterized in that said first cache memory includes a first-level third cache and a second-level fourth cache.

6. A computer system according to claim 1, characterized in that said first main processor (46,66) operates with assistance from a second cache memory (48;68,70) and said second main processor (50,72) operates with assistance from a third cache memory (52,54;74,78).

7. A computer system according to claim 6, characterized in that said second cache memory consists of a fifth cache (48) and said third cache memory includes a first-level sixth cache (52) and second-level seventh cache (54).

8. A computer system according to claim 6, characterized in that said second cache memory includes a first-level eighth cache (68) and a second-level ninth cache (70) and said third cache memory includes a first-level tenth cache (74) and a second-level eleventh cache (78)

9. A computer system according to claim 8, characterized in that at least one of said eighth, ninth, tenth and eleventh caches (68,70,74,78) on one of said levels is of a different type from the other caches on the same level.

10. A computer system according to claim 8 or claim 9, characterized in that at least one of said eighth and tenth caches (68,74) is a write-through cache.
